# EUROPÄISCHE PATENTSCHRIFT

(11) **EP 2 511 541 B1**
(45) Veröffentlichungstag und Bekanntmachung des Hinweises auf die Patenterteilung: **08.10.2014**
(21) Anmeldenummer: 12161981.1
(22) Anmeldetag: 29.03.2012
(51) Int. Cl.: F16B 35/04, F16B 25/00

(54) **Gewindeschneidende Schraube**
Thread tapping screw
Vis-taraud

(30) Priorität: 14.04.2011 DE 102011007406
(43) Veröffentlichungstag der Anmeldung: 17.10.2012
(73) Patentinhaber: TOGE-Dübel A. Gerhard KG, 90431 Nürnberg (DE)
(72) Erfinder: Gerhard, Andreas, 90427 Nürnberg (DE)
(74) Vertreter: Rau, Schneck & Hübner Patentanwälte Rechtsanwälte PartGmbB

(56) Entgegenhaltungen:
- EP-A1- 2 204 244
- EP-A2- 2 048 382
- EP-A2- 2 055 969
- EP-A2- 2 055 970

## Beschreibung

Die Erfindung betrifft eine gewindeschneidende Schraube zum Eindrehen entlang einer Eindreh-Richtung in ein Bohrloch in einem harten Material, insbesondere Beton oder Granit.

Eine gewindeschneidende Schraube ist aus der WO 2004/074 697 A1 bekannt. Dazu weist ein Schneid-Gewinde der Schraube mindestens ein Schneid-Element auf, das in eine innere Mantelfläche eines Bohrlochs ein Bohrloch-Gewinde schneidet. Die Anwendung dieser Schraube in einem Bohrloch in einem Material großer Härte ist problematisch, da beim Eindrehen der Schraube von dem das Bohrloch umgebenden Material radial und/oder tangential zur Mittel-Längs-Achse der Schraube wirkende Reaktionskräfte und daraus resultierende, auf die Schraube wirkende Drücke auftreten, die das Eindrehen der Schraube erschweren oder verhindern. Insbesondere besteht die Gefahr, dass bei Aufbringen eines erhöhten Eindreh-Drehmoments auf die Schraube diese abgedreht und damit zerstört wird.

Eine gewindeschneidende Schraube ist aus der EP 2 055 970 A2 bekannt, wobei ein Schneid-Gewinde Aussparungen aufweist. In jede Aussparung ist ein Schneidkörper eingesetzt. Der Werkstoff des Schneidkörpers weist eine größere Härte auf als die Härte des Gewindes. Weitere selbstschneidenden Schrauben sind beispielsweise bekannt aus EP 2 055 969 A2, EP 2 204 244 A1 und EP 2 048 382 A2.

Der Erfindung liegt die Aufgabe zugrunde, eine gewindeschneidende Schraube zum Eindrehen entlang einer Eindreh-Richtung in ein Bohrloch in einem harten Material, insbesondere Beton oder Granit, derart zu schaffen, dass das Eindrehen erleichtert ist.

Die Aufgabe wird durch die Merkmale des Anspruchs 1 gelöst. Der Kern der Erfindung besteht darin, dass an einem Schneid-Gewinde einer gewindeschneidenden Schraube mindestens ein Schneid-Element mit mindestens einer Schneid-Kante vorgesehen ist, wobei die Schneid-Kante entlang einer Eindreh-Richtung an einem vorderen Ende des mindestens einen Schneid-Elements angeordnet ist, und wobei die Schneid-Kante durch einen entgegen der Eindreh-Richtung nachfolgenden Stütz-Abschnitt am Schneid-Gewinde abgestützt ist. Durch die mindestens eine Schneid-Kante ist gewährleistet, dass jedes Schneid-Element eine vergleichsweise geringe Auflagefläche an einer Bohrloch-Innenwand aufweist. Das Schneid-Element wirkt wie ein Meißel. Das mindestens eine Schneid-Element weist ein Schneid-Material auf, das relativ zu einem zylindrischen Kern der gewindeschneidenden Schraube eine größere Härte hat. Der zylindrische Kern weist eine Mittel-Längs-Achse auf. Einstückig mit dem Kern ist das Schneid-Gewinde ausgebildet, das sich entlang eines Gewinde-Abschnitts erstreckt und zum Einschneiden eines Bohrloch-Gewindes in das Material dient. Das Schneid-Gewinde weist einen Schneid-Gewinde-Durchmesser auf.

Die Schraube weist einen Schneid-Einsatz des Schneid-Elements auf, der sich im Wesentlichen kreissegmentförmig in Richtung der Mittel-Längs-Achse erstreckt und in den Kern hineinragt. Der Schneid-Einsatz ist unkompliziert herstellbar. Insbesondere ist es möglich, einen Schneid-Einsatz als Schweißpunkt auf den Gewindeflanken des Schneid-Gewindes auszuführen und anschließend in Form einer Gewinde-Wendel des Schneid-Gewindes zu überschleifen. Ein derartiger Schneid-Einsatz erstreckt sich ausgehend von einer äußeren Kante des Schneid-Gewindes im Wesentlichen kreissegmentförmig senkrecht zur Mittel-Längs-Achse und ragt in den Kern der Schraube hinein.

Eine Schraube nach Anspruch 2 ermöglicht eine sichere und dauerhafte Befestigung an dem mittels des Schneid-Gewindes der Schraube geschnittenen Bohrloch-Gewinde.

Eine Schraube nach Anspruch 3 vereinfacht die Beaufschlagung der Schraube mit einem Einschraub-Drehmoment.

Eine Schraube nach Anspruch 4 ermöglicht einen verbesserten Eingriff des Schneid-Gewindes mit dem Schneid-Element in das das Bohrloch umgebende Material beim Eindrehen der Schraube.

Eine Schraube nach Anspruch 5 ermöglicht ein Aufnehmen, Sammeln und Mittransportieren von Abraum-Material, das infolge eines Schneid-Vorgangs durch ein Schneid-Element von dem das Bohrloch umgebenden Material abgetragen wird.

Eine Schraube nach Anspruch 6 weist mehrere Schneid-Elemente auf, wobei mindestens ein Vor-Schneid-Element und mindestens ein dem Vor-Schneid-Element, insbesondere entgegen der Eindreh-Richtung, nachfolgendes Haupt-Schneid-Element vorgesehen sind. Dabei ist die mindestens eine Schneid-Kante des Vor-Schneid-Elements mit einem kleineren radialen Abstand bezüglich der Mittel-Längs-Achse angeordnet als die mindestens eine Schneid-Kante des Haupt-Schneid-Elements. Dadurch wird erreicht, dass das mindestens eine Vor-Schneid-Element zunächst das Bohrloch-Gewinde in die insbesondere unversehrte Bohrloch-Innenwand vorgeschnitten wird. Dazu können die Vor-Schneid-Elemente eine senkrecht zur Gewinde-Wendel orientierte, vergleichsweise dünnere Breite und insbesondere gegenüber den Haupt-Schneid-Elementen reduzierte Spitzenbreite aufweisen. Mittels der Haupt-Schneid-Elemente wird das vorgeschnittene Schneid-Gewinde mit den erforderlichen Maßen, wie beispielsweise Schneid-Gewinde-Durchmesser, Schneid-Gewinde-Tiefe und/oder Schneid-Gewindebreite ausgeführt.

Eine Schraube nach Anspruch 7 ermöglicht ein verbessertes Vorschneiden des Bohrloch-Gewindes, da die Schneid-Arbeit auf mehrere Vor-Schneid-Elemente aufgeteilt ist. Die mechanische Belastung je Vor-Schneid-Element und damit dessen Verschleiß sind reduziert.

Eine Schraube nach Anspruch 8 weist mehrere Haupt-Schneid-Elemente auf, die insbesondere identisch ausgeführt sein können. Bei der Verwendung mehrerer Haupt-Schneid-Elemente kann eine maximal erreichbare Einschraubtiefe der Schraube erhöht werden. Beim Eindrehen der Schraube greift entlang der Eindreh-Richtung zunächst nur das erste Haupt-Schneid-Element, sofern die nachfolgenden Haupt-Schneid-Elemente identisch zu diesem ausgeführt sind. Für den Fall, dass die mindestens eine Schneid-Kante eines oder mehrerer nachfolgender Haupt-Schneid-Elemente in einem größeren radialen Abstand zur Mittel-Längs-Achse angeordnet ist, ermöglichen diese Schneid-Elemente eine Erhöhung der Gewindetiefe des Bohrloch-Gewindes. Für den Fall, dass ein voran angeordnetes Haupt-Schneid-Element infolge eines Schneid-Vorgangs abgenutzt wird und beispielsweise die Geometrie des Haupt-Schneid-Elements derart verändert wird, dass eine Schneid-Kante in einem bezogen auf den Ausgangsstand der Schraube reduzierten radialen Abstand bezüglich der Mittel-Längs-Achse angeordnet ist, wird die erforderliche Schneidarbeit von diesem abgenutzten Haupt-Schneid-Element und dem diesem Schneid-Element nachfolgenden Schneid-Element bewerkstelligt. Das bedeutet, dass eine Abnutzung eines Schneid-Elements nicht zu einer negativen Beeinträchtigung der Schneid-Eignung der Schraube führt. Die Haupt-Schneid-Elemente sind vorzugsweise redundant ausgeführt. Ein Schneid-Element kann beispielsweise dann als verschlissen betrachtet werden, wenn dessen Schneid-Kante nicht über den Durchmesser eines Trag-Gewindes hinausragt.

Eine Schraube nach Anspruch 9 weist ein besonders vorteilhaftes Schneidverhalten auf. Durch den im Wesentlichen sägezahnförmigen Querschnitt senkrecht zu der Gewinde-Wendel des Schneid-Gewindes des mindestens einen Schneid-Elements weist dieses sowohl eine reduzierte Auflagefläche auf, mit der das Schneid-Element an der Bohrloch-Innenwand, also an dem Gesteinuntergrund, angreift. Bei identischem Eindreh-Drehmoment wird durch die reduzierte Auflagefläche ein vergleichsweise höherer Druck auf das das Bohrloch umgebende Material ausgeübt und damit die Schneidwirkung verbessert. Insbesondere kann das sägezahnförmige Schneid-Element eine sich im Wesentlichen radial bezüglich der Mittel-Längs-Achse orientierte, vordere Schneid-Element-Flanke und eine sich im Wesentlichen tangential bezüglich der Mittel-Längs-Achse orientierte hintere Schneid-Element-Flanke aufweisen. Entsprechend weist das Schneid-Element einen stabilen und robusten Stütz-Abschnitt auf. Die Gefahr eines Ausbrechens des Schneid-Elements während eines Schneid-Vorgangs ist reduziert. Insbesondere ist die mindestens eine Schneid-Kante zwischen der vorderen und der hinteren Schneid-Element-Flanke angeordnet und insbesondere senkrecht zu den beiden Schneid-Element-Flanken orientiert.

Eine Schraube nach Anspruch 10 weist einen verbesserten Abtrag von Material an der Bohrloch-Innenwand auf. Dadurch, dass die vordere Schneid-Element-Flanke gegenüber der radialen Richtung bezogen auf die Mittel-Längs-Achse geneigt ist, kann das Schneidverhalten in Abhängigkeit des Schneid-Materials und/oder des das Bohrloch umgebenden Materials angepasst werden. Ein Neigungs-Winkel bezüglich der radialen Richtung liegt in einem Winkelbereich von +/- 10 °, insbesondere +/- 8 ° und insbesondere +/- 5 °.

Eine Schraube nach Anspruch 11 ermöglicht ein besseres Eingreifen der vorderen Schneid-Element-Flanke in den Gesteinsuntergrund. Die vordere Schneid-Element-Flanke kann senkrecht zur Gewinde-Wendel des Schneid-Gewindes linear, konkav oder konvex ausgeführt sein, wobei die jeweilige Ausführung eine Anpassung der Schneide zur Bearbeitung des das Bohrloch umgebenden Materials ermöglicht.

Eine Schraube nach Anspruch 12 gewährleistet eine Mindestlänge des Stütz-Abschnitts, so dass eine derartige Schraube eine erhöhte Stabilität aufweist. Die hintere Schneid-Element-Flanke ist insbesondere in einem Querschnitt längs der Gewinde-Wendel konvex geformt. Ausgehend von der Schneid-Kante, die an einem entlang der Eindreh-Richtung vorderen Ende der hinteren Schneid-Element-Flanke angeordnet ist, nimmt ein Radius der hinteren Schneid-Element-Flanke ab, insbesondere kontinuierlich ab.

Eine Schraube nach Anspruch 13 weist eine besonders vorteilhafte Ausführung des Schneid-Element-Querschnitts auf. Ein derartiges Schneid-Element kombiniert eine verbesserte Schneid-Wirkung durch erhöhtes abrasives Verhalten mit einer erhöhten Stabilität des Schneid-Elements infolge der verbesserten Stützwirkung.

Eine Schraube nach Anspruch 14 weist eine verbesserte Effektivität hinsichtlich des Schneidvorgangs auf, da ein Volumenanteil pro Schneid-Element, der aus dem das Bohrloch umgebende Material ausgeschnitten wird, erhöht ist.

Eine Schraube nach Anspruch 15 ermöglicht ein Vor- und Nachschneiden mit einem einzigen Schneid-Element.

Eine Schraube nach Anspruch 16 ermöglicht eine unkomplizierte Fertigung eines Schneid-Elements mit mindestens zwei Schneid-Kanten.

Eine Schraube nach Anspruch 17 weist ein verbessertes Schneidverhalten dadurch auf, dass Abraum-Material in einer Kerbe zwischen zwei Schneid-Kanten gesammelt und abtransportiert werden kann. Ein Klemmen der Schraube kann dadurch verhindert werden.

Eine Schraube nach Anspruch 18 weist eine verbesserte Schneid-Charakteristik auf, da durch eine Anordnung der mindestens zwei Schneid-Kanten bei voneinander verschiedenen radialen Abständen bezüglich der Mittel-Längs-Achse ein Vorschneiden mit der ersten Schneid-Kante effektiv erfolgt und ein Nachschneiden mit der zweiten Schneid-Kante zuverlässig das Einschneiden des Bohrloch-Gewindes ermöglicht.

Zusätzliche Merkmale und Einzelheiten der Erfindung ergeben sich aus der nachfolgenden Beschreibung von drei Ausführungsbeispielen anhand der Zeichnung. Es zeigen:
- Fig. 1: eine teilgeschnittene Seitenansicht einer erfindungsgemäßen Schraube,
- Fig. 2: eine Darstellung der in ein Bohrloch vollständig eingeschraubten Schraube,
- Fig. 3: einen Längsschnitt durch ein Vor-Schneid-Element gemäß der Schnittlinie III-III in Fig. 1,
- Fig. 4: einen Querschnitt des Vor-Schneid-Elements gemäß Schnittlinie IV-IV in Fig. 1,
- Fig. 5: einen Längsschnitt durch ein Haupt-Schneid-Element gemäß einem ersten Ausführungsbeispiel gemäß der Schnittlinie V-V in Fig. 1,
- Fig. 6: einen Querschnitt des Haupt-Schneid-Elements gemäß der Schnittlinie VI-VI in Fig. 1,
- Fig. 7: einen Fig. 5 entsprechenden Längsschnitt eines Haupt-Schneid-Elements gemäß einem zweiten Ausführungsbeispiel,
- Fig. 8: einen Querschnitt des Haupt-Schneid-Elements gemäß Fig. 7,
- Fig. 9: einen Fig. 5 entsprechenden Längsschnitt eines Haupt-Schneid-Elements gemäß einem dritten Ausführungsbeispiel und
- Fig. 10: einen Querschnitt durch das Haupt-Schneid-Element gemäß Fig. 9.

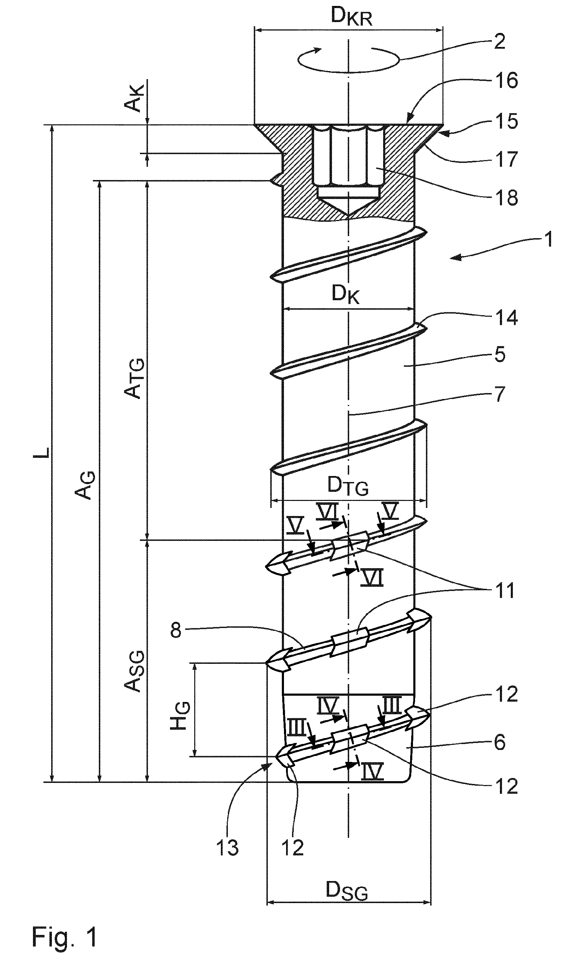

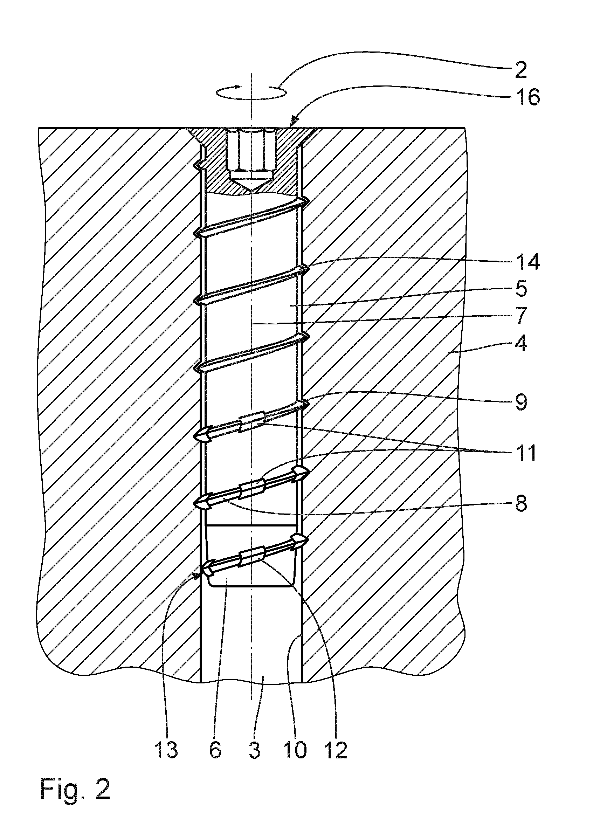

Im Folgenden wird unter Bezugnahme auf die Fig. 1 und 2 eine erfindungsgemäße gewindeschneidende Schraube 1 beschrieben. Die gewindeschneidende Schraube 1 ist zum Eindrehen entlang einen Eindreh-Richtung 2 in ein Bohrloch 3 in einem harten Material 4, insbesondere Beton oder harte Natursteine, wie beispielsweise Granit, geeignet. Es ist auch möglich, die Schraube 1 für weichere Materialien einzusetzen.

Die Schraube 1 weist einen im Wesentlichen zylindrischen Kern 5 mit einem Einführende 6 und einer Mittel-Längs-Achse 7 auf. Einstückig mit dem Kern 5 ist ein Schneid-Gewinde 8 ausgebildet, das sich vom Einführende 6 wendelförmig, d. h. in Form einer Helix, als Gewinde-Wendel bezüglich der Mittel-Längs-Achse 7 entlang eines Schneid-Gewinde-Abschnitts A_{SG} erstreckt. Das Schneid-Gewinde 8 ist selbstschneidend und ermöglicht ein Einschneiden eines Bohrloch-Gewindes 9 in eine Innenwand 10 des Bohrlochs 3 in dem Material 4. Dazu weist das Schneid-Gewinde 8 mehrere Schneid-Elemente 11, 12 auf, die in Fig. 1, 2 schematisch dargestellt sind. Der Kern 5 weist einen Kern-Durchmesser D_{K} und das Schneid-Gewinde 8 einen Schneid-Gewinde-Durchmesser D_{SG} auf, wobei der Schneid-Gewinde-Durchmesser D_{SG} größer ist als der Kern-Durchmesser D_{K}. Der Schneid-Gewinde-Durchmesser D_{SG} ist durch die Schneid-Elemente 11 festgelegt.

Die an einem an dem Einführende 6 angeordneten Gewindeanfang 13 des Schneid-Gewindes 8 angeordneten Schneid-Elemente 12 werden auch als Vor-Schneid-Elemente 12 bezeichnet. Entsprechend werden die Schneid-Elemente 11, die sich entgegen der Eindreh-Richtung 2 an der Gewinde-Wendel nachgelagert zu den Vor-Schneid-Elementen 12 befinden, als Haupt-Schneid-Elemente 11 bezeichnet. Insbesondere sind die Haupt-Schneid-Elemente 11 außerhalb des Einführendes 6 und insbesondere eine Ganghöhe H_{G} beabstandet von dem Gewindeanfang 13 angeordnet. Gemäß dem in Fig. 1 gezeigten Ausführungsbeispiel der Schraube 1 sind ausgehend vom Gewindeanfang 13 drei Vor-Schneid-Elemente 12 vorgesehen, die entgegen der Eindreh-Richtung 2 entlang der GewindeWendel des Schneid-Gewindes 8 beabstandet zueinander und nacheinander angeordnet sind. Den Vor-Schneid-Elementen 12 schließen sich entgegen der Eindreh-Richtung 2 entlang der Gewinde-Wendel des Schneid-Gewindes 8 die Haupt-Schneid-Elemente 11 an. Gemäß dem in Fig. 1 gezeigten Ausführungsbeispiel der Schraube 1 sind entlang eines Wendelumfangs, d. h. entlang einer 360 °-Umdrehung der Gewinde-Wendel um die Mittel-Längs-Achse 7 vier Schneid-Elemente 11, 12 vorgesehen. Ein Abstand entlang der Mittel-Längs-Achse 7 zweier Punkte, die bezüglich der Mittel-Längs-Achse 7 eine 360 °-Umdrehung an der Gewinde-Wendel beabstandet sind, ist die Ganghöhe H_{G}. Es können auch mehr oder weniger Schneid-Elemente 11, 12 entlang des Umfangs der Gewinde-Wendel angeordnet sein. Die Ganghöhe H_{G} entspricht im Wesentlichen einer Länge des Einführendes 6, entlang dessen sich der Kern 5 in der Form eines Kegelabschnitts verjüngt.

An den Schneid-Gewinde-Abschnitt A_{SG} schließt sich ein Trag-Gewinde-Abschnitt A_{TG} an, entlang dessen sich ein einstückig mit dem Kern 5 ausgebildetes Trag-Gewinde 14 erstreckt. Das Trag-Gewinde 14 dient zum Einschrauben in das Bohrloch-Gewinde 9. Das Trag-Gewinde 14 entspricht im Wesentlichen dem Schneid-Gewinde 8, wobei im Bereich des Trag-Gewindes 14 keine Schneid-Elemente vorgesehen sind. Entsprechend ist ein Trag-Gewinde-Durchmesser D_{TG} gegenüber dem Schneid-Gewinde-Durchmesser D_{SG} reduziert. Gemäß dem in Fig. 1 gezeigten Ausführungsbeispiel weisen das Schneid-Gewinde 8 und das Trag-Gewinde 14 eine identische Ganghöhe H_{G} auf. Dies ist vorteilhaft, damit die Schraube 1 mit dem Trag-Gewinde 14 in das von dem Schneid-Gewinde 8 geschnittene Bohrloch-Gewinde 9 erleichtert eingedreht werden kann.

Entsprechend gilt für eine Länge A_{G} eines Gesamt-Gewinde-Abschnitts entlang der Mittel-Längs-Achse 7 der Schraube 1: A_{G} = A_{SG} + A_{TG}. An den Gesamt-Gewinde-Abschnitt A_{G} kann sich ein kreiszylindrischer Zylinder-Abschnitt anschließen, der eine im Wesentlichen glatte Oberfläche aufweist. Ferner schließt sich ein dem Einführende 6 gegenüberliegend angeordneter Kragenabschnitt A_{K} an, in dem ein gegenüber dem Kern 5 radial vorspringender, einteilig mit dem Kern 5 ausgebildeter Kragen 15 vorgesehen ist. Der Kragen 15 weist eine ebene, senkrecht zur Mittel-Längs-Achse 7 verlaufende Stirnfläche 16 auf. Die axiale Dicke des Kragens 15 reduziert sich mit zunehmendem radialen Abstand, d. h. der Kragen 15 wird begrenzt durch die Stirnfläche 16 und eine schräg zu dieser verlaufenden Flankenfläche 17, wobei sich beide unter einem spitzen Winkel schneiden. Es sind grundsätzlich andere Querschnittsformen des Kragens 15 möglich, wie beispielsweise eine Scheibenform. Der Kragen 15 weist einen Außen-Durchmesser D_{KR} auf. Es gilt: D_{KR} / D_{K} ≥ 1,2, insbesondere ≥ 1,3 und insbesondere ≥ 1,5. Der Kragen 15 dient zur versenkenden Anordnung der Schraube 1 in dem Bohrloch 3, so dass die Stirnfläche 16 der Schraube 1 plan zu einer Oberfläche des Materials 4 angeordnet ist.

Es ist auch möglich, die Schraube 1 ohne Kragen 15 auszuführen. Im Bereich des Kragens 15 ist zur Beaufschlagung der Schraube 1 mit einem Einschraub-Drehmoment für das Eindrehen der Schraube 1 ein Innen-Sechskantprofil 18 als Einschraub-Mittel vorgesehen. Es ist auch möglich, das Einschraub-Mittel 18 in einer anderen Form auszuführen, wie beispielsweise als einen auf den Kern 5 aufgesetzten, über den Kem-Durchmesser D_{K} hinausragenden Schraubenkopf mit beispielsweise einem Querschnitt in Form eines Außen-Mehrkantprofils, insbesondere Außen-Sechskantprofils. Mit dem Schraubenkopf kann ein Bauteil örtlich festgelegt werden. Andere, gängige Einschraub-Mittel 18 sind ebenfalls möglich. Beispielsweise kann das Einschraub-Mittel 18 auch als Innen-Dreikant oder Innen-Vierkant ausgebildet sein. Es kann also allgemein betrachtet ein Innen-Mehrkant sein. Gemäß einer bevorzugten Ausführungsform ist als Einschraub-Mittel 18 ein Anschluss-Gewinde mit einem Mehrkantantrieb vorgesehen. Alternativ kann auch als Einschraub-Mittel 18 ein Innen-Mehrkant vorgesehen sein, der unterhalb eines Innen-Gewinde-Abschnitts angeordnet ist. Alternativ ist bei einer Schraube 1 ohne Kragen 15 als Einschraub-Mittel 18 ein Innen-Mehrkant unterhalb eines Innen-Gewinde-Abschnitts vorgesehen, so dass ein besonders tiefes bzw. weites Einschrauben der Schraube 1 möglich ist.

Entlang der Mittel-Längs-Achse 7 weist die Schraube 1 eine Gesamtlänge L auf, für die gilt: L ≥ A_{G} + A_{K}.

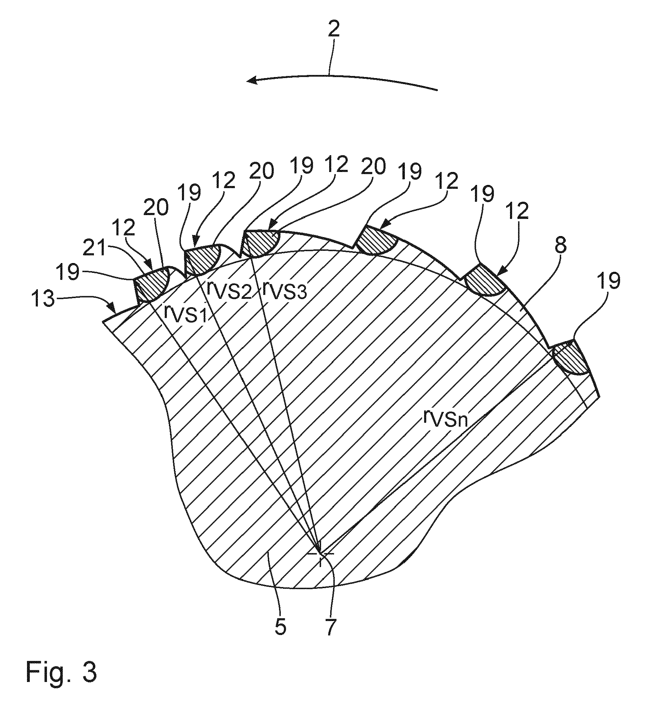

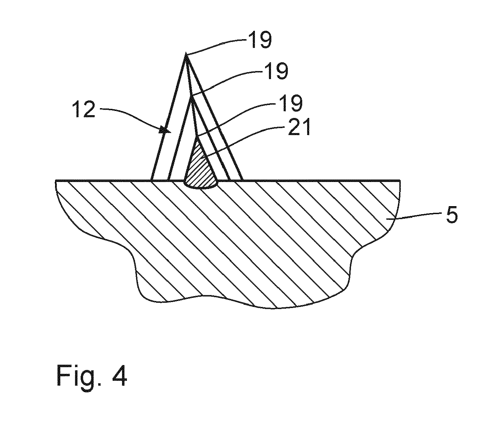

Im Folgenden wird anhand der Fig. 3 und 4 ein Vor-Schneid-Element 12 näher erläutert. Dargestellt ist eine Ausschnittsvergrößerung eines Längsschnitts entlang der Gewinde-Wendel des Schneid-Gewindes 8 gemäß der Schnittlinie III-III in Fig. 1, die entsprechend wie die Darstellungsebene gemäß Fig. 3 quer zur Mittel-Längs-Achse 7 orientiert ist. Ausgehend von dem Gewinde-Anfang 13 sind entgegen der Eindreh-Richtung 2 mehrere Vor-Schneid-Elemente 12 hintereinander angeordnet. Jedes Vor-Schneid-Element 12 weist eine Schneid-Kante 19 auf, die entlang der Eindreh-Richtung 2 an einem vorderen Ende des Vor-Schneid-Elements 12 angeordnet ist. Der Schneid-Kante 19 folgt ein entlang der Eindreh-Richtung 2 gesehen ein Stütz-Abschnitt 20 nach. Durch den Stütz-Abschnitt 20 ist die Schneid-Kante 19 am Schneid-Gewinde 8 abgestützt.

Das Vor-Schneid-Element 12 weist ein Schneid-Material auf, das relativ zum Kern 5 eine größere Härte aufweist. Das Schneid-Material ist in Form eines Schneid-Einsatzes 21 ausgebildet und ragt im Wesentlichen kreissegmentförmig ausgehend von der Gewinde-Wendel des Schneid-Gewindes 8 in das Schneid-Gewinde 8 hinein und ragt zumindest teilweise in den Kern 5 hinein. Der Kern 5 kann beispielsweise aus einem Metall mit Kohlenstoffanteil zwischen > 0 und 0,5 Gew.-% bestehen. Das Vor-Schneid-Element ist als ein mit dem Schneid-Gewinde 8 verbundener Schweißkörper aus Metall ausgebildet und weist einen Kohlenstoffanteil von mehr als 0,8 Gew.-% auf. Insbesondere beträgt der Kohlenstoffanteil des Schneid-Materials, also das Metall, aus dem das Vor-Schneid-Element hergestellt ist, aus mindestens 1,0 Gew.-%, insbesondere mehr als 1,5 Gew.-% und insbesondere mehr als 2,0 Gew.-% Kohlenstoff.

Bei der Schraube 1 sind mehrere Vor-Schneid-Elemente 12 vorgesehen, wobei deren radiale Abstände r_{VSi}, mit i = 1, 2, 3, ... n der jeweiligen Schneid-Kante 19 entgegen der Eindreh-Richtung 2 zunimmt, d. h. r_{VS1} < r_{VS2} < r_{VS3} < ... < r_{VSn}. Dadurch ist gewährleistet, dass mit Beginn des Einschneidens die Schraube 1 beim Eindrehen in das Bohrloch 3 eingezogen wird. Der Selbstschneidemechanismus der Schraube 1 ist erleichtert, da das erste am Gewindeanfang 13 angeordnete Vor-Schneid-Element 12 einen vergleichsweise geringen Anteil der Schneidarbeit verrichtet. Das entgegen der Eindreh-Richtung 2 nachfolgend angeordnete zweite Vor-Schneid-Element 12 leistet einen weiteren Betrag der Schneidarbeit, der daraus resultiert, dass das nachfolgende Vor-Schneid-Element 12 größer ausgebildet ist als das vorauseilende Vor-Schneid-Element 12. Größer bedeutet in diesem Fall, dass der radiale Abstand der Schneid-Kante 19 vergrößert ist. Ferner ist eine Breite des zweiten Vor-Schneid-Elements 12 gegenüber dem ersten Vor-Schneid-Element 12 vergrößert. Dadurch, dass die Schneidarbeit auf mehrere Vor-Schneid-Elemente 12 aufgeteilt ist, wird die mechanische Belastung je Vor-Schneid-Element 12 und damit ein möglicher Verschleiß reduziert. Weiterhin ist das Eindreh-Drehmoment reduziert, d. h. das Eindrehen ist erleichtert. Es ist möglich, die Größen aufeinander folgender Vor-Schneid-Elemente 12 entlang der Gewinde-Wendel derart aufeinander abzustimmen, dass die Scheidarbeit gleichmäßig auf mehrere, insbesondere drei Vor-Schneid-Elemente 12 verteilt ist.

Wie in Fig. 4 dargestellt, weisen die Vor-Schneid-Elemente 12 jeweils einen senkrecht zur Gewinde-Wendel des Schneid-Gewindes 8 orientierten dreieckförmigen, insbesondere gleichschenkligen, Querschnitt auf mit zwei identisch ausgeführten Seitenflanken, die sich unter einem spitzen Winkel an der Schneid-Kante 19 schneiden. Mit den Vor-Schneid-Elementen 12 wird das Bohrloch-Gewinde 9 vorgeschnitten, d. h. es wird ein Gewinde in die Innenwand 10 des Bohrlochs 3 geschnitten, das gegenüber dem zu erzeugenden Bohrloch-Gewinde 9 eine reduzierte Gewindetiefe und eine reduzierte Gewindebreite aufweist. Die endgültige und exakte erforderliche Gewindetiefe und Gewindebreite werden mittels der Haupt-Schneid-Elemente 11 erzeugt.

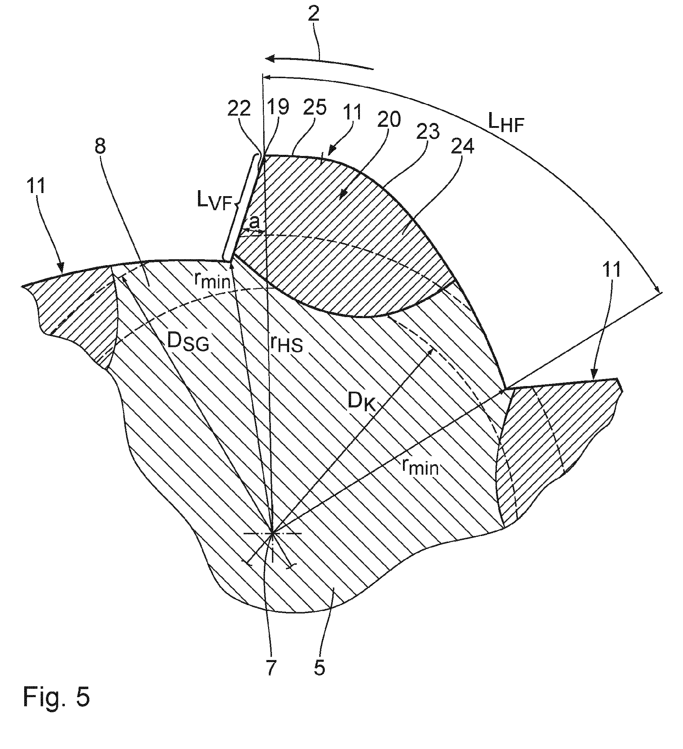

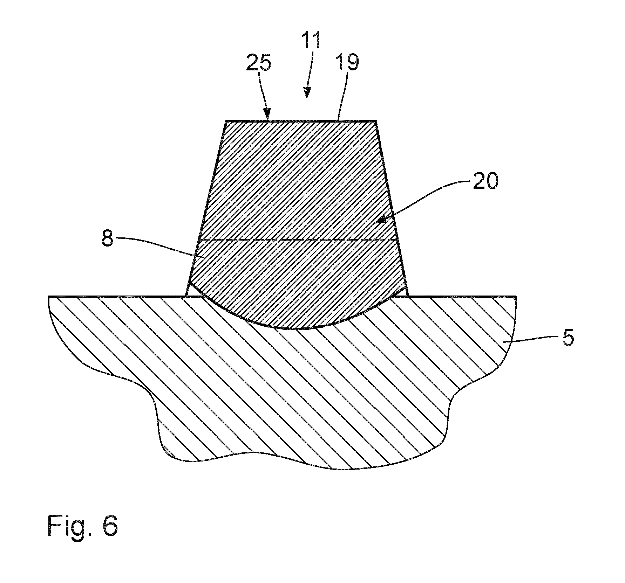

Im Folgenden wird anhand der Fig. 5 und 6 ein erstes Ausführungsbeispiel eines Haupt-Schneid-Elements 11 näher erläutert.

Das Haupt-Schneid-Element 11 gemäß dem ersten Ausführungsbeispiel weist einem im Wesentlichen sägezahnförmigen Querschnitt längs der Gewinde-Wendel des Schneid-Gewindes 8 auf. Der sägezahnförmige Querschnitt hat eine im Wesentlichen bezüglich der Mittel-Längs-Achse 7 radial orientierte, vordere Schneid-Element-Flanke 22 und eine damit verbundene, sich im Wesentlichen tangential bezüglich der Mittel-Längs-Achse 7 orientierte hintere Schneid-Element-Flanke 23. Zwischen den beiden Schneid-Element-Flanken 22, 23 ist die Schneid-Kante 19 mit einem radialen Abstand r_{HS} zu der Mittel-Längs-Achse 7 angeordnet. Die Haupt-Schneid-Elemente 12 sind gemäß dem in Fig. 5 gezeigten Ausführungsbeispiel identisch ausgeführt. Es ist auch möglich, dass entgegen der Eindreh-Richtung 2 nachfolgend angeordnete Haupt-Schneid-Elemente einen zunehmenden radialen Abstand r_{HS} der Schneid-Kante 19 von der Mittel-Längs-Achse 7 aufweisen. Gemäß dem in Fig. 5 gezeigten Ausführungsbeispiel ist die vordere Schneid-Element-Flanke 22 um einen positiven Neigungs-Winkel a von 10 ° gegenüber der radialen Richtung ausgehend von der Mittel-Längs-Achse 7 geneigt. Es ist auch möglich, dass die vordere Schneid-Element-Flanke 22 um einen negativen Neigungs-Winkel a gegenüber der radialen Richtung geneigt ist. In diesem Fall weist das Haupt-Schneid-Element 12 an der vorderen Schneid-Element-Flanke 22 eine nach innen, d. h. ins Materialinnere geneigte Schneid-Element-Flanke auf. Die Neigung der vorderen Schneid-Element-Flanke 22 kann in Abhängigkeit des zu bearbeitenden Gesteins entsprechend angepasst werden. Der Neigungs-Winkel a beträgt betragsmäßig höchstens 10 °, insbesondere höchstens 8 ° und insbesondere höchstens 5 ° gegenüber der radialen Richtung der Mittel-Längs-Achse 7. Es ist auch möglich, die vordere Schneid-Element-Flanke 22 nicht linear und beispielsweise konkav oder konvex geformt auszuführen. Dies kann beispielsweise für die Mitnahme und den Abtransport von ausgeräumtem Material vorteilhaft sein.

Das Haupt-Schneid-Element 12 weist einen Schneid-Einsatz 24 auf. Der Schneid-Einsatz 24 umfasst das Schneid-Material, das mit Bezug auf die Vor-Schneid-Elemente 12 bereits erläutert worden ist.

Die Schneid-Kante 19 ragt über den Schneid-Gewinde-Durchmesser D_{SG} hervor. Das bedeutet, dass das vom Schneid-Gewinde 8 in das Bohrloch 3 eingeschnittene Bohrloch-Gewinde 9 eine größere Tiefe aufweist als das Trag-Gewinde 14. Das Trag-Gewinde 14 kann dadurch leichtgängig und mit reduziertem Eindreh-Widerstand in das geschnittene Bohrloch-Gewinde 9 eingedreht werden. Dadurch, dass zumindest die Gewindebreiten des Schneid-Gewindes 8 und des Trag-Gewindes 14 im Wesentlichen übereinstimmen, ist die Schraube 1 mit dem Trag-Gewinde 14 sicher in dem Bohrloch-Gewinde 9 gehalten. Die Schneid-Kante 19 ist entlang der Eindreh-Richtung 2 an einem vorderen Ende des Haupt-Schneid-Elements 11 angeordnet. Der Schneid-Kante 19 folgt entgegen der Eindreh-Richtung 2 ein Stütz-Abschnitt 20 nach, der die Schneid-Kante 19 am Schneid-Gewinde 8 abstützt.

Der radiale Abstand r_{HS} der Schneid-Kante 19 von der Mittel-Längs-Achse 7 ist größer als der Schneid-Gewinde-Durchmesser D_{SG}, d. h. die Schneid-Kante 19 ragt über das Schneid-Gewinde 8 hervor.

Gemäß der Darstellung in Fig. 5 sind entlang des Schneid-Gewindes 8 benachbarte Haupt-Schneid-Elemente 11 direkt aufeinanderfolgend, d. h. nicht beabstandet zueinander, angeordnet. Es ist auch möglich, benachbarte Schneid-Elemente 11, 12, insbesondere benachbarte Haupt-Schneid-Elemente 11, beabstandet entlang des Schneid-Gewindes 8 zueinander anzuordnen. Ein Abstand zwischen den benachbarten Schneid-Elementen 11, 12 beträgt insbesondere höchstens 15 % der Ganghöhe H_{G}, insbesondere höchstens 12 % und insbesondere höchstens 10 %.

Ein radialer Abstand r_{VS} der Schneid-Kante 19 eines Vor-Schneid-Elements 12 ist gegenüber dem radialen Abstand r_{HS} der Schneid-Kante 19 des Haupt-Schneid-Elements 11 reduziert. Dies gilt gleichermaßen für eine Gewindebreite senkrecht zur Gewinde-Wendel des Schneid-Gewindes 8. Eine derartige Gewindebreite des Haupt-Schneid-Elements 11 ist gegenüber dem Vor-Schneid-Element 12 vergrößert. Senkrecht zur Gewinde-Wendel des Schneid-Gewindes 8 weist das Haupt-Schneid-Element 11 einen trapezförmigen Querschnitt auf.

Dadurch, dass das Vor-Schneid-Element 12 einen dreieckförmigen Querschnitt zur Gewinde-Wendel aufweist, ist es bezüglich einer Schneidbearbeitung längs der Eindreh-Richtung 2 scharfkantig ausgeführt. Das Vor-Schneid-Element 12 ermöglicht einen im Wesentlichen linienförmigen Kontakt mit dem das Bohrloch 3 umgebenden Material 4. Dadurch ist die Kontaktfläche zwischen dem Vor-Schneid-Element 12 und dem Material 4 minimiert.

Die hintere Schneid-Element-Flanke 23 weist ausgehend von der Schneid-Kante 19 entgegen der Eindreh-Richtung 2 einen bezüglich der Mittel-Längs-Achse 7 orientierten Zylindermantelflächen-Abschnitt 25 auf. In diesem Abschnitt 25 ist die hintere Schneid-Element-Flanke 23 konzentrisch zur Mittel-Längs-Achse 7 angeordnet. Daran schließt sich ein weiterer Abschnitt der hinteren Schneid-Element-Flanke 23 an, der entgegen der Eindreh-Richtung 2 einen kontinuierlich abnehmenden Radius bezogen auf die Mittel-Längs-Achse 7 derart aufweist, dass ausgehend von dem Radius r_{HS} der Schneid-Kante 19 der Radius auf ein Minimum des Radius rₘᵢₙ reduziert wird. Der minimale Radius rₘᵢₙ kennzeichnet das Ende des in Eindreh-Richtung 2 gesehenen vorangegangenen Haupt-Schneid-Elements 11 und zugleich den Beginn des entgegen der Eindreh-Richtung 2 nachfolgenden, nächsten Haupt-Schneid-Elements 11. Für den Fall, dass zwei benachbarte Haupt-Schneid-Elemente 11 beabstandet zueinander angeordnet sind, ist das Ende des vorangegangenen Vor-Schneid-Elements 11 von dem Beginn des nachfolgenden Haupt-Schneid-Elements 11 entgegen der Darstellung in Fig. 5 beabstandet. Zwischen dem Ende des ersten und dem Beginn des zweiten Haupt-Schneid-Elements 11 kann die Schraube 1 beispielsweise einen konstanten, minimalen Radius rₘᵢₙ aufweisen. Es ist auch möglich, dass ein davon abweichender Radius vorgesehen ist, der insbesondere gegenüber dem minimalen Radius rₘᵢₙ reduziert sein kann.

Die vordere Schneid-Element-Flanke 22 weist eine Länge L_{VF} von höchstens 15 % des Schneid-Gewinde-Durchmessers D_{SG}, insbesondere von höchstens 10 % und insbesondere von höchstens 5 % auf. Gemäß dem gezeigten Ausführungsbeispiel in Fig. 5 ist die vordere Schneid-Element-Flanke 22 als ebene, um den Neigungs-Winkel a gegenüber der radialen Richtung bezogen auf die Mittel-Längs-Achse 7 geneigte Trapezfläche ausgeführt. Die vordere Schneid-Element-Flanke kann auch konkav oder konvex ausgeführt sein.

Entsprechend weist die hintere Schneid-Element-Flanke 23, die konvex geformt ist, eine Länge L_{HF} auf, die einer Bogenlänge entspricht, die mindestens 25 % des Schneid-Gewinde-Durchmessers D_{SG}, insbesondere mindestens 30 % und insbesondere mindestens 35 % beträgt. Dadurch ist gewährleistet, dass der Stützabschnitt 20 eine ausreichende Tiefe zum Abstützen der Schneid-Kante 19 und/oder der vorderen Schneid-Element-Flanke 22 gewährleistet. Der Stütz-Abschnitt 20 dient zur Stabilisierung und als Widerstand gegen tangential auftretende Reaktionskräfte während eines Schneidvorgangs. Insbesondere ist ein derartiger Stütz-Abschnitt 20 gegenüber stiftförmigen Schneid-Elementen, die sich radial von dem Kern 5 einer Schraube nach außen erstrecken, vorteilhaft, da die Schneid-Elemente 11, 12 eine erhöhte Stabilität und Festigkeit insbesondere gegenüber tangential zur Mittel-Längs-Achse 7 gerichteten Kräften aufweisen.

Insbesondere ist die Länge L_{HF} der hinteren Schneid-Element-Flanke 23 größer als die Länge L_{VF} der vorderen Schneid-Element-Flanke 22, wobei das Verhältnis L_{HF} / L_{VF} insbesondere mindestens 1,6, insbesondere mindestens 3 und insbesondere mindestens 7 beträgt.

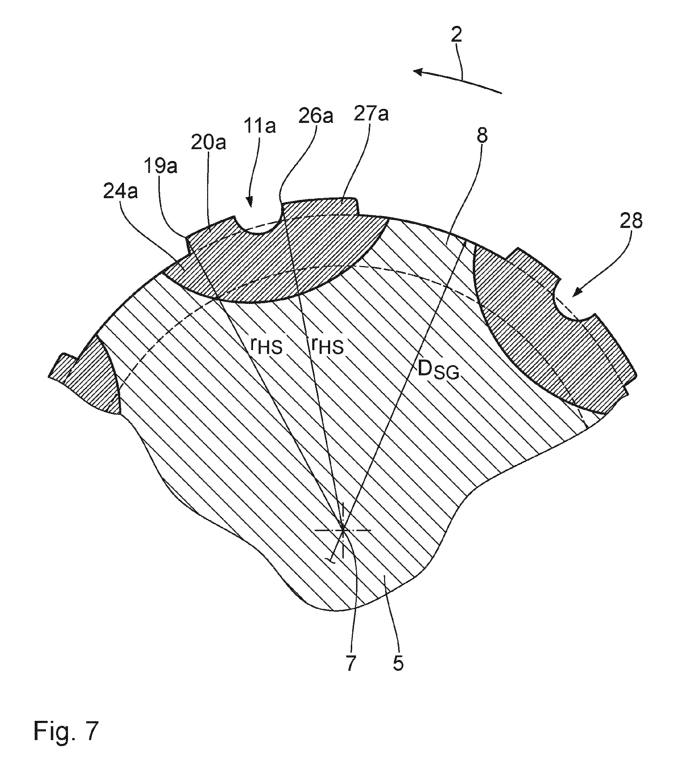

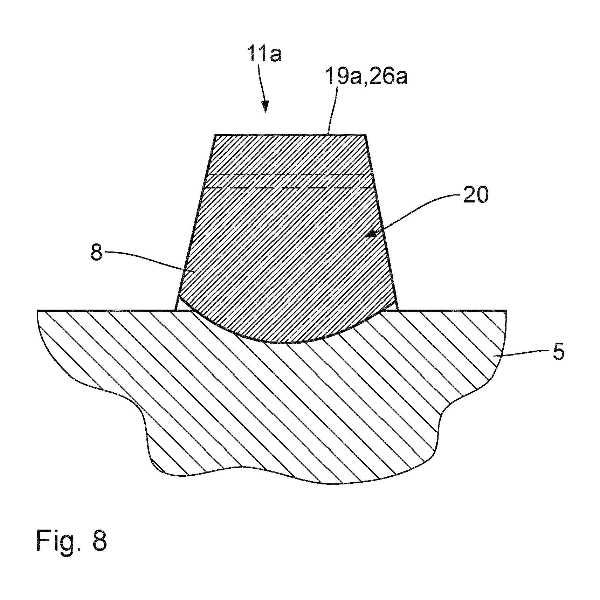

Im Folgenden wird unter Bezugnahme auf die Fig. 7 und 8 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Der wesentliche Unterschied gegenüber dem ersten Ausführungsbeispiel besteht darin, dass die Haupt-Schneid-Elemente 11a zwei Schneid-Kanten 19a, 26a aufweisen. Entsprechend ergibt sich jeweils anschließend ein nachfolgender Stütz-Abschnitt 20a für die erste Schneid-Kante 19a und 27a für die zweite Schneid-Kante 26a. Die erste Schneid-Kante 19a ist an dem vorderen Ende entlang der Eindreh-Richtung 2 des Haupt-Schneid-Elements 11a angeordnet.

Ein jeweils radialer Abstand der Schneid-Kanten 19a, 26a von der Mittel-Längs-Achse 7 ist größer als der Schneid-Gewinde-Durchmesser D_{SG} des Schneid-Gewindes 8. Zwischen den beiden Schneid-Kanten 19a, 26a ist eine radial nach außen geöffnete Kerbe 28 des Haupt-Schneid-Elements 11a vorgesehen, wobei die zweite Schneid-Kante 26a an einem entlang der Eindreh-Richtung 2 hinteren Kerben-Auslauf angeordnet ist. Die Kerbe 28 ist im Wesentlichen halbkreisförmig ausgeführt und wird auch als Hohlkehle bezeichnet. Dadurch, dass das Haupt-Schneid-Element 11a an einer äußeren Mantelfläche durch die Kerbe 28 eine reduzierte Mantelfläche aufweist, ist das Schneidverhalten des Schneid-Elements 11a verbessert. Weiterhin kann die Kerbe 28, die zwischen den beiden Schneid-Kanten 19a und 26a entlang der Eindreh-Richtung 2 angeordnet ist, genutzt werden, um während des Schneidvorgangs abgetrenntes Abraummaterial zu sammeln und abzutransportieren. Dadurch wird insbesondere ein Klemmen der Schraube 1 beim Eindrehen verhindert. Dadurch, dass das Schneid-Element 11a zwei Schneid-Kanten 19a, 26a aufweist, ist das Schneidverhalten, insbesondere die Effektivität eines Schneidvorgangs damit verbessert. Für den Fall, dass sich insbesondere die vordere Schneid-Kante 19a abnutzen sollte und beispielsweise verschleißt, dient die zweite Schneid-Kante 26a desselben Schneid-Elements 11a zum schneidenden Eingriff an dem Gesteinsuntergrund. Das Haupt-Schneid-Element 11a weist ebenfalls einen Schneid-Einsatz 24a aus härterem Material als der Kern 5 auf.

Senkrecht zur Gewinde-Wendel des Schneid-Gewindes 8 weist das Haupt-Schneid-Element 11a eine im Wesentlichen identische Querschnittsform auf wie das Haupt-Schneid-Element gemäß dem ersten Ausführungsbeispiel. Die Querschnittsform ist trapezförmig.

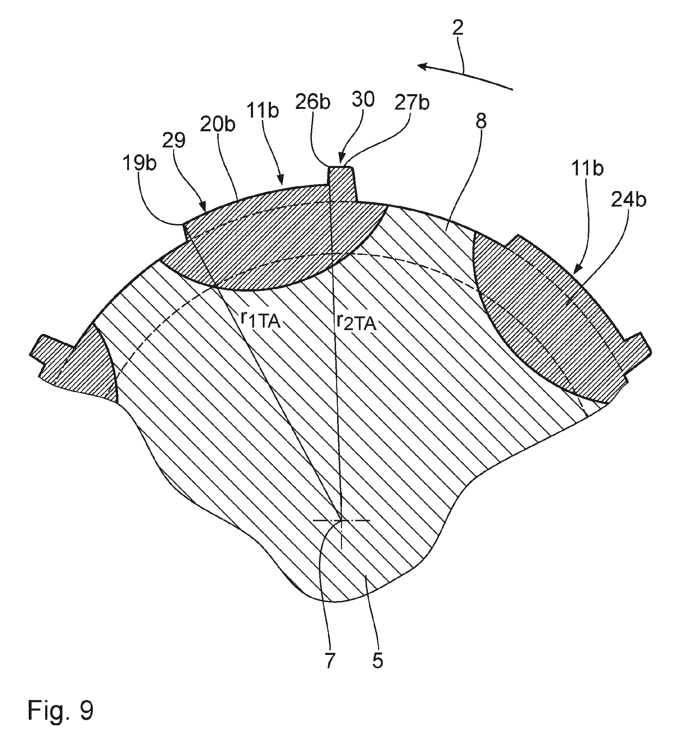

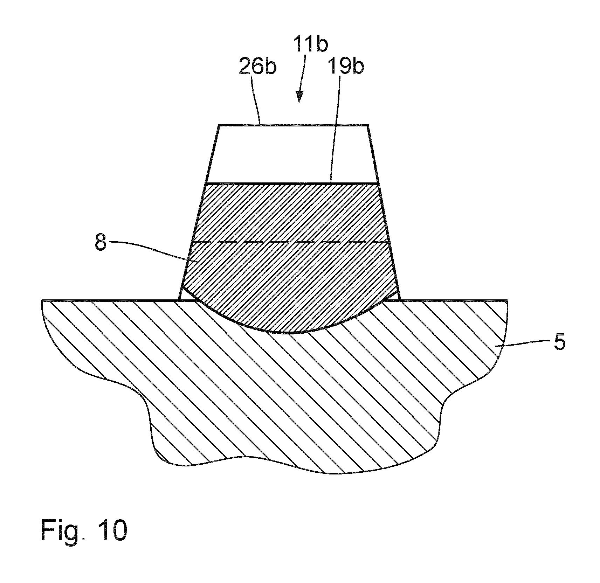

Im Folgenden wird unter Bezugnahme auf die Fig. 9 und 10 ein drittes Ausführungsbeispiel der Erfindung beschrieben. Konstruktiv identische Teile erhalten dieselben Bezugszeichen wie bei den beiden ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten b. Wie bei dem zweiten Ausführungsbeispiel weist das Haupt-Schneid-Element 11b zwei Schneid-Kanten 19b und 26b auf, die jeweils mittels eines sich entgegen der Eindreh-Richtung nachfolgenden Stütz-Abschnitts 20b bzw. 27b abgestützt sind. Wesentlicher Unterschied gegenüber dem zweiten Ausführungsbeispiel ist die Anordnung der Schneid-Kanten 19b, 26b bezüglich ihres radialen Abstands zu der Mittel-Längs-Achse 7. Das Haupt-Schneid-Element 11b weist einen treppenförmigen Querschnitt längs der Gewinde-Wendel des Schneid-Gewindes 8 auf. Der treppenförmige Querschnitt umfasst einen ersten Treppen-Abschnitt 29 und einen entgegen der Eindreh-Richtung 2 nachfolgend angeordneten zweiten Treppen-Abschnitt 30. Entsprechend ist die erste Schneid-Kante 19b an einem vorderen Ende des ersten Treppen-Abschnitts 29 und damit am vorderen Ende des Schneid-Elements 11b angeordnet. Die zweite Schneid-Kante 26b ist am vorderen Ende des zweiten Treppen-Abschnitts 30 angeordnet. Der radiale Abstand r_{1TA} der ersten Schneid-Kante 19b zu der Mittel-Längs-Achse 7 ist kleiner als der radiale Abstand r_{2TA} der zweiten Schneid-Kante 26b. Das Haupt-Schneid-Element 11b weist einen Schneid-Einsatz 24b auf.

Dadurch, dass das Schneid-Element 11b gemäß dem dritten Ausführungsbeispiel zwei Schneid-Kanten 19b, 26b aufweist, die mit unterschiedlichen radialen Abständen r_{1TA}, r_{2TA} bezüglich der Mittel-Längs-Achse 7 am Schneid-Gewinde 8 angeordnet sind, wird die Funktion des Vor- und Feinschneidens von einem einzigen Schneid-Element 11b erfüllt. Die erste Schneid-Kante 19b, die in Eindreh-Richtung 2 vorne am Schneid-Element 11b angeordnet ist, weist einen reduzierten radialen Abstand r_{1TA} gegenüber dem radialen Abstand r_{2TA} der nachfolgenden, zweiten Schneid-Kante 26b auf. Ein Vorschneiden erfolgt mittels der ersten Schneid-Kante 19b. Die zweite Schneid-Kante 26b komplettiert den Schneidvorgang. Dadurch ist der Schneid-Vorgang mit einem Schneid-Element 11b zweistufig ausgeführt, so dass eine Reduzierung des Eindreh-Widerstandes erreicht wird.

Für alle Ausführungsbeispiele der gewindeschneidenden Schraube gilt, dass die Schneid-Elemente und insbesondere die Haupt-Schneid-Elemente redundant an dem Schneid-Gewinde 8 vorhanden sind. Das bedeutet, dass auch bei einer Abnutzung bzw. Verschleiß eines in der Eindreh-Richtung 2 vorderen Schneid-Elements ein Einschneiden der Schraube weiterhin möglich ist, da die nachfolgenden Schneid-Elemente die erforderliche, auf das abgenutzte Schneid-Element bezogene Schneid-Mehrarbeit leisten. Ein Schneid-Element leistet keinen Schneidbeitrag mehr und ist somit verschlissen, wenn die entsprechende Schneid-Kante nicht über den Durchmesser des Trag-Gewindes 14 hinausragt. Durch eine Abnutzung eines Schneid-Elements, d. h. durch Abrieb des Schneid-Materials im Bereich des Schneid-Einsatzes wird lediglich die Geometrie des Schneid-Elements verändert und insbesondere der radiale Abstand der Schneid-Kante von der Mittel-Längs-Achse 7 verringert. In diesem Zustand ist aber dennoch eine Schneidoperation mit dem teilweise abgeschliffenen Schneid-Element möglich.

Dadurch, dass die Vor-Schneid-Elemente 12 eine vergleichsweise geringe Breite senkrecht zur Gewinde-Wendel des Schneid-Gewindes 8 aufweisen und insbesondere im Bereich der Schneid-Kante spitz zulaufen, d. h. eine spitze Form aufweisen, sind die Vor-Schneid-Elemente zum Einschneiden, das auch als "Einziehen" der Schraube in das Bohrloch, d. h. zum Schneiden des Bohrloch-Gewindes bezeichnet wird, gut geeignet. Mit den Haupt-Schneid-Elementen kann ein gewünschtes Bohrlochgewinde mit der erforderlichen Genauigkeit, Gewindebreite und Gewindetiefe erzeugt werden.

## Patentansprüche

1. Gewindeschneidende Schraube zum Eindrehen entlang einer Eindreh-Richtung (2) in ein Bohrloch (3) in einem harten Material (4), wobei die Schraube (1) umfasst
a. einen im Wesentlichen zylindrischen Kern (5) mit einer Mittel-Längs-Achse (7),
b. ein einstückig mit dem Kern (5) ausgebildetes, sich entlang eines Schneid-Gewinde-Abschnitts (A_{SG}) erstreckendes Schneid-Gewinde (8) zum Einschneiden eines Bohrloch-Gewindes (9) in das Material (4) mit
i. einem Schneid-Gewinde-Durchmesser (D_{SG}), und
ii. mindestens einem Schneid-Element (11, 12; 11a, 12; 11b, 12), wobei das mindestens eine Schneid-Element (11, 12; 11a, 12; 11b, 12) aufweist
c. ein Schneid-Material mit einer relativ zum Kern (5) größeren Härte und
d. mindestens eine Schneid-Kante (19; 19a, 26a; 19b, 26b),
i. die entlang der Eindreh-Richtung (2) an einem vorderen Ende des mindestens einen Schneid-Elements (11, 12; 11a, 12; 11b, 12) angeordnet ist und
ii. die durch einen entgegen der Eindreh-Richtung (2) nachfolgenden Stütz-Abschnitt (20; 20a, 27a; 20b, 27b) am Schneid-Gewinde (8) abgestützt ist,
e. einen Schneid-Einsatz (21, 24; 24a; 24b), der sich im Wesentlichen kreissegmentförmig in Richtung der Mittel-Längs-Achse (7) erstreckt,
**dadurch gekennzeichnet, dass** der Schneid-Einsatz (21, 24; 24a; 24b) in den Kern (5) hineinragt.

2. Schraube gemäß Anspruch 1, **gekennzeichnet durch** ein einstückig mit dem Kern (5) ausgebildetes, sich entlang eines Trag-Gewinde-Abschnitts (A_{TG}) erstreckendes Trag-Gewinde (14) zum Einschrauben in das Bohrloch-Gewinde (9).

3. Schraube gemäß einem der vorstehenden Ansprüche, **gekennzeichnet durch** ein Einschraub-Mittel (18) zur Beaufschlagung der Schraube (1) mit einem Einschraub-Drehmoment.

4. Schraube gemäß einem der vorstehenden Ansprüche, **dadurch gekennzeichnet, dass** die mindestens eine Schneid-Kante (19; 19a, 26a; 19b, 26b) radial über den Schneid-Gewinde-Durchmesser (D_{SG}) hervorragt.

5. Schraube gemäß einem der vorstehenden Ansprüche, **dadurch gekennzeichnet, dass** entlang des Schneid-Gewindes (8) benachbarte Schneid-Elemente (11, 12; 11a, 12; 11b, 12) beabstandet zueinander angeordnet sind, wobei ein Abstand zwischen den benachbarten Schneid-Elementen (11, 12; 11a, 12; 11b, 12) insbesondere höchstens 15% einer Ganghöhe (H_{G}), insbesondere höchstens 12% einer Ganghöhe (H_{G}) und insbesondere höchstens 10% einer Ganghöhe (H_{G}) beträgt.

6. Schraube gemäß einem der vorstehenden Ansprüche, **gekennzeichnet durch** mehrere Schneid-Elemente (11, 12; 11a, 12; 11b, 12) umfassend mindestens ein Vor-Schneid-Element (12) und mindestens ein Haupt-Schneid-Element (11; 11a; 11b), wobei ein radialer Abstand (r_{VS}) der mindestens einen Schneid-Kante (19) des Vor-Schneid-Elements (12) von der Mittel-Längs-Achse (7) kleiner ist als ein radialer Abstand (r_{HS}) der mindestens einen Schneid-Kante (19; 19a, 26a; 19b, 26b) des Haupt-Schneid-Elements (11; 11a; 11b) von der Mittel-Längs-Achse (7).

7. Schraube gemäß Anspruch 6, **gekennzeichnet durch** mehrere Vor-Schneid-Elemente (12), wobei der radiale Abstand (r_{VS}) der mindestens einen Schneid-Kante (19) benachbarter Vor-Schneid-Elemente (12) entgegen der Eindreh-Richtung (2) ansteigt.

8. Schraube gemäß Anspruch 6 oder 7, **gekennzeichnet durch** mehrere Haupt-Schneid-Elemente (11; 11a; 11b), wobei der radiale Abstand (r_{HS}) der mindestens einen Schneid-Kante (19; 19a, 26a; 19b, 26b) eines Haupt-Schneid-Elements (11; 11a; 11b) größer oder gleich dem radialen Abstand (r_{HS}) der mindestens einen Schneid-Kante (19; 19a, 26a; 19b, 26b) eines entgegen der Eindreh-Richtung (2) nachfolgend angeordneten Haupt-Schneid-Elements (11; 11a; 11b) ist.

9. Schraube gemäß einem der vorstehenden Ansprüche, **gekennzeichnet durch** einen im Wesentlichen sägezahnförmigen Querschnitt längs einer Gewindewendel des Schneid-Gewindes (8) Ausführung des mindestens einen Schneid-Elements (19), insbesondere mit einer, sich im Wesentlichen radial bezüglich der Mittel-Längs-Achse (7) orientierten, vorderen Schneid-Element-Flanke (22) und mit einer, sich im Wesentlichen tangential bezüglich der Mittel-Längs-Achse (7) orientierten, hinteren Schneid-Element-Flanke (23).

10. Schraube gemäß Anspruch 9, **dadurch gekennzeichnet, dass** die vordere Schneid-Element-Flanke (22) um einen Betrag eines NeigungsWinkels (a) von höchstens 10°, insbesondere höchstens 8° und insbesondere höchstens 5° gegenüber der radialen Richtung der Mittel-Längs-Achse (7) geneigt ist.

11. Schraube gemäß Anspruch 9 oder 10, **dadurch gekennzeichnet, dass** die vordere Schneid-Element-Flanke (22) eine Länge (L_{VF}) von höchstens 15% des Schneid-Gewinde-Durchmessers (D_{SG}), insbesondere höchstens 10% des Schneid-Gewinde-Durchmessers (D_{SG}) und insbesondere höchstens 5% des Schneid-Gewinde-Durchmessers (D_{SG})aufweist.

12. Schraube gemäß einem der Ansprüche 9 bis 11, **dadurch gekennzeichnet, dass** die hintere Schneid-Element-Flanke (23) eine Länge (L_{HF}) von mindestens 25% des Schneid-Gewinde-Durchmessers (D_{SG}), insbesondere mindestens 30% des Schneid-Gewinde-Durchmessers (D_{SG}) und insbesondere mindestens 35% des Schneid-Gewinde-Durchmessers (D_{SG}) aufweist.

13. Schraube gemäß den Ansprüchen 9 bis 12, **dadurch gekennzeichnet, dass** eine Länge (L_{HF}) der hinteren Schneid-Element-Flanke (23) größer ist als eine Länge (L_{VF}) der vorderen Schneid-Element-Flanke (22) und insbesondere mindestens das 1,6-fache, insbesondere mindestens das 3-fache und insbesondere mindestens das 7-fache der Länge (L_{VF}) der vorderen Schneid-Element-Flanke (22) aufweist.

14. Schraube gemäß einem der Ansprüche 9 bis 13, **dadurch gekennzeichnet, dass** die hintere Schneid-Element-Flanke (23) ausgehend von der mindestens einen Schneid-Kante (19) einen bezüglich der Mittel-Längs-Achse (7) orientierten Zylindermantelflächen-Abschnitt (25) aufweist.

15. Schraube gemäß einem der Ansprüche 1 bis 8, **gekennzeichnet durch** mindestens zwei Schneid-Kanten (19a, 26a; 19b, 26b).

16. Schraube gemäß Anspruch 15, **gekennzeichnet durch** eine radial nach außen geöffnete Kerbe (28) des Schneid-Elements (11a), wobei mindestens eine der Schneid-Kanten (26a) an einem, insbesondere entlang der Eindreh-Richtung (2) hinteren, Kerben-Auslauf angeordnet ist.

17. Schraube gemäß Anspruch 15 oder 16, **dadurch gekennzeichnet, dass** eine Kerbe (28) zwischen zwei Schneid-Kanten (19a, 26a) angeordnet ist.

18. Schraube gemäß Anspruch 15, **gekennzeichnet durch** einen treppenförmigen Querschnitt längs einer Gewindewendel des Schneid-Gewindes (8) des Schneid-Elements (11b) mit einem ersten Treppen-Abschnitt (29) und einem zweiten Treppen-Abschnitt (30), wobei ein radialer Abstand (r_{1TA}) der mindestens einen Schneid-Kante (19b) des ersten Treppen-Abschnitts (29) zu der Mittel-Längs-Achse (7) kleiner ist als ein radialer Abstand (r_{2TA}) der mindestens einen Schneid-Kante (26b) des zweiten Treppen-Abschnitts (30) zu der Mittel-Längs-Achse (7).

## Claims

1. Thread-tapping screw to be screwed into a drill hole (3) in a hard material (4) along a screw-in direction (2), the screw (1) comprising
a. a substantially cylindrical core (5) having a central longitudinal axis (7);
b. a tapping thread (8) formed in one piece with the core (5) and extending along a tapping thread portion (A_{SG}) in order to tap a drill hole thread (9) into the material (4), the tapping thread (8) comprising
i. a tapping thread diameter (D_{SG}), and
ii. at least one tapping member (11, 12; 11a, 12; 11b, 12), wherein the at least one tapping member (11, 12; 11a, 12; 11b, 12) has
c. a tapping material with a hardness that is greater than that of the core (5), and
d. at least one tapping edge (19; 19a, 26a; 19b, 26b) which
i. is arranged at a front end of the at least one tapping member (11, 12; 11a, 12; 11b, 12) along the screw-in direction (2), and
ii. is supported against the tapping thread (8) by a support portion (20; 20a, 27a; 20b, 27b) arranged downstream thereof when seen in a direction opposite to the screw-in direction (2),
e. a tapping insert (21, 24; 24a; 24b) which extends in the direction of the central longitudinal axis (7) substantially in the shape of a segment of a circular arc,
**characterized in that** the tapping insert (21, 24; 24a; 24b) protrudes into the core (5).

2. Screw according to claim 1, **characterized by** a carrier thread (14) formed in one piece with the core (5) and extending along a carrier thread portion (A_{TG}) in order to be screwed into the drill hole thread (9).

3. Screw according to one of the preceding claims, **characterized by** a screw-in means (18) in order to apply a screw-in torque to the screw (1).

4. Screw according to one of the preceding claims, **characterized in that** the at least one tapping edge (19; 19a, 26a; 19b, 26b) protrudes radially beyond the tapping thread diameter (D_{SG}).

5. Screw according to one of the preceding claims, **characterized in that** tapping members (11, 12; 11a, 12; 11b, 12) arranged adjacent to each other along the tapping thread (8) are spaced from each other, wherein a distance between the adjacent tapping members (11, 12; 11a, 12; 11b, 12) in particular amounts to no more than 15% of a pitch (H_{G}), in particular to no more than 12% of a pitch (H_{G}), and in particular to no more than 10% of a pitch (H_{G}).

6. Screw according to one of the preceding claims, **characterized by** a number of tapping members (11, 12; 11a, 12; 11b, 12) comprising at least one pre-tapping member (12) and at least one main tapping member (11, 11a; 11b), wherein a radial distance (r_{VS}) of the at least one tapping edge (19) of the pre-tapping member (12) from the central longitudinal axis (7) is smaller than a radial distance (r_{HS}) of the at least one tapping edge (19; 19a, 26a; 19b, 26b) of the main tapping member (11; 11a; 11b) from the central longitudinal axis (7).

7. Screw according to claim 6, **characterized by** a number of pre-cutting members (12), wherein the radial distance (r_{VS}) of the at least one tapping edge (19) of adjacent pre-tapping members (12) increases in the direction opposite to the screw-in direction (2).

8. Screw according to claim 6 or 7, **characterized by** a number of main tapping members (11; 11a; 11b), wherein the radial distance (r_{HS}) of the at least one tapping edge (19; 19a, 26a; 19b, 26b) of a main tapping member (11; 11a; 11b) is greater than or equal to the radial distance (r_{HS}) of the at least one tapping edge (19; 19a, 26a; 19b, 26b) of a main tapping member (11; 11a; 11b) arranged downstream thereof in the direction opposite to the screw-in direction (2).

9. Screw according to one of the preceding claims, **characterized by** a substantially serrated cross-section along a flight of the tapping thread (8) design of the at least one tapping member (19), in particular comprising a front tapping member flank (22) oriented substantially radially relative to the central longitudinal axis (7) and a rear tapping member flank (23) oriented substantially tangentially relative to the central longitudinal axis (7).

10. Screw according to claim 9, **characterized in that** the front tapping member flank (22) is inclined relative to the radial direction of the central longitudinal axis (7) by an absolute value of an angle of inclination (a) of no more than 10°, in particular of no more than 8°, and in particular of no more than 5°.

11. Screw according to claim 9 or 10, **characterized in that** the front tapping member flank (22) has a length (L_{VF}) of no more than 15% of the tapping thread diameter (D_{SG}), in particular of no more than 10% of the tapping thread diameter (D_{SG}), and in particular of no more than 5% of the tapping thread diameter (D_{SG}).

12. Screw according to one of claims 9 to 11, **characterized in that** the read tapping member flank (23) has a length (L_{HF}) of at least 25% of the tapping thread diameter (D_{SG}), in particular of at least 30% of the tapping thread diameter (D_{SG}), and in particular of at least 35% of the tapping thread diameter (D_{SG}).

13. Screw according to one of claims 9 to 12, **characterized in that** a length (L_{HF}) of the rear tapping member flank (23) is greater than a length (L_{VF}) of the front tapping member flank (22) and in particular amounts to at least 1.6 times, in particular to at least 3 times, and in particular to at least 7 times the length (L_{VF}) of the front tapping member flank (22).

14. Screw according to one of claims 9 to 13, **characterized in that** starting from the at least one tapping edge (19), the rear tapping member flank (23) has a cylinder surface portion (25) oriented relative to the central longitudinal axis (7).

15. Screw according to one of claims 1 to 8, **characterized by** at least two tapping edges (19a, 26a; 19b, 26b).

16. Screw according to claim 15, **characterized by** a notch (28) of the tapping member (11a) which is open in the radially outward direction, wherein at least one of the tapping edges (26a) is arranged at a notch end, in particular a rear notch end when seen along the screw-in direction (2).

17. Screw according to claim 15 or 16, **characterized in that** a notch (28) is arranged between two tapping edges (19a, 26a).

18. Screw according to claim 15, **characterized by** a step-like cross-section along a flight of the tapping thread (8) of the tapping member (11b) comprising a first step portion (29) and a second step portion (30), wherein a radial distance (r_{1TA}) of the at least one tapping edge (19b) of the first step portion (29) from the central longitudinal axis (7) is smaller than a radial distance (r_{2TA}) of the at least one tapping edge (26b) of the second step portion (30) from the central longitudinal axis (7).

## Revendications

1. Vis-taraud destinée à être insérée le long d'une direction de vissage (2) dans un alésage (3) dans un matériau dur (4), la vis comprenant
a. une âme (5), essentiellement cylindrique, avec un axe longitudinal central (7),
b. un filet de taraudage (8), conçu en formant une seule pièce avec l'âme (5), s'étendant le long d'une partie filetée de taraudage (P_{FT}), destiné à tarauder un filet d'alésage (9) dans le matériau (4), comprenant
i. un diamètre du filet de taraudage (D_{FT}) et
ii. au moins un élément taraudeur (11, 12 ; 11a, 12 ; 11b, 12), le au moins un élément taraudeur (11, 12 ; 11a, 12 ; 11b, 12) présentant
c. un matériau taraudeur possédant une dureté supérieure à celle de l'âme (5) et
d. au moins une arête de taraudage (19 ; 19a, 26a ; 19b, 26b),
i. qui est disposée à l'extrémité frontale d'au moins un élément taraudeur (11, 12 ; 11a, 12 ; 11b, 12) le long d'une direction de vissage (2) et
ii. qui est appuyée sur le filet de taraudage (8) par une partie support (20 ; 20a, 27a ; 20b, 27b), postérieure, opposée à la direction de vissage (2),
e. un élément inséré taraudeur (21, 24 ; 24a ; 24b) qui s'étire en direction de l'axe longitudinal central (4) essentiellement sous forme d'un segment circulaire,
**caractérisée en ce que** l'élément inséré taraudeur (21, 24 ; 24a ; 24b) pénètre à l'intérieur de l'âme (5).

2. Vis selon la revendication 1, **caractérisée par** un filet de support (14), conçu en formant une seule pièce avec l'âme (5), s'étendant le long d'une portion (P_{FS}) de filet de support, pour le vissage dans le filet de l'alésage (9).

3. Vis selon l'une des revendications précédentes, **caractérisée par** un moyen de vissage (18) pour l'application d'un moment de rotation de vissage à la vis (1).

4. Vis selon l'une des revendications précédentes, **caractérisée en ce qu'**au moins une arête de taraudage (19 ; 19a, 16a ; 19b, 26b) dépasse radialement au dessus du diamètre du filet de taraudage (D_{FT}).

5. Vis selon l'une des revendications précédentes, **caractérisée en ce que** des éléments taraudeurs (11, 12 ; 11a, 12 ; 11b, 12) voisins, espacés les uns des autres, sont disposés le long du filet de taraudage (8), un espace entre des éléments taraudeurs (11, 12 ; 11a, 12 ; 11b, 12) voisins atteignant notamment au plus 15 % de la hauteur d'un pas (Hp), en particulier, au plus 12 % de la hauteur d'un pas (Hp) et particulièrement au plus 10 % de la hauteur d'un pas (Hp).

6. Vis selon l'une des revendications précédentes, **caractérisée par** plusieurs éléments taraudeurs (11, 12 ; 11a, 12 ; 11b, 12) comprenant au moins un élément d'ébauche taraudeur (12) et au moins un élément taraudeur principal (11 ; 11a ; 11b), une distance radiale (r_{TE}) entre au moins une arête de taraudage (19) de l'élément d'ébauche taraudeur (12) et l'axe longitudinal central (7) étant inférieure à une distance radiale (r_{TP}) entre au moins une arête de taraudage (19 ; 19a, 26a ; 19b, 26b) de l'élément taraudeur principal (11 ; 11a ; 11b) et l'axe longitudinal central (7).

7. Vis selon la revendication 6, **caractérisée par** plusieurs éléments d'ébauche taraudeurs (12), la distance radiale (r_{TS}) d'au moins une arête de taraudage (19) d'éléments d'ébauche taraudeurs (12) voisins augmentant dans le sens opposé à la direction de vissage (2).

8. Vis selon les revendications 6 ou 7, **caractérisée par** plusieurs éléments taraudeurs principaux (11 ; 11a ; 11b), la distance radiale (r_{PT}) d'au moins une arête de taraudage (19 ; 19a, 26a ; 19b, 26b) d'un élément taraudeur principal (11 ; 11a ; 11b) étant supérieure ou égale à la distance radiale (r_{PT}) d'au moins une arête de taraudage (19 ; 19a, 26a ; 19b, 26b) d'un élément taraudeur principal (11 ; 11a ; 11b) disposé après, dans le sens opposé à la direction de vissage (2).

9. Vis selon l'une des revendications précédentes, **caractérisée par** une conception de la section transversale essentiellement en forme de dents de scie le long de l'hélice du filet de taraudage (8) d'au moins un élément taraudeur (19), notamment, avec un profil d'élément taraudeur frontal (22), s'orientant essentiellement de manière radiale par rapport à l'axe longitudinal central (7) et un profil d'élément taraudeur arrière (23), s'orientant essentiellement de manière tangentielle par rapport à l'axe longitudinal central (7).

10. Vis selon la revendication 9, **caractérisée en ce que** le profil de l'élément taraudeur frontal (22) est incliné selon un angle d'inclinaison (a) d'au maximum 10 °, notamment, d'au maximum 8 ° et particulièrement d'au maximum 5 ° par rapport à la direction radiale de l'axe longitudinal central (7).

11. Vis selon les revendications 9 ou 10, **caractérisée en ce que** le profil de l'élément taraudeur frontal (22) possède une longueur (L_{FP}) d'au maximum 15 % du diamètre du filet de taraudage (D_{FT}), notamment d'au maximum 10 % du diamètre du filet de taraudage (D_{FT}) et particulièrement d'au maximum 5 % du diamètre du filet de taraudage (D_{FT}).

12. Vis selon l'une des revendications 9 à 11, **caractérisée en ce que** le profil de l'élément taraudeur arrière (23) possède une longueur (L_{AP}) d'au minimum 25 % du diamètre du filet de taraudage (D_{FT}), notamment d'au minimum 30 % du diamètre du filet de taraudage (D_{FT}) et particulièrement d'au minimum 35 % du diamètre du filet de taraudage (D_{FT}).

13. Vis selon les revendications 9 à 12, **caractérisée en ce qu'**une longueur (L_{AP}) du profil de l'élément taraudeur arrière (23) est supérieure à une longueur (L_{FP}) du flanc de l'élément taraudeur frontal (22) et représente notamment au moins 1,6 fois, en particulier, au moins 3 fois et particulièrement au moins 7 fois la longueur (L_{AP}) du profil de l'élément taraudeur frontal (22).

14. Vis selon l'une des revendications 9 à 13, **caractérisée en ce que** le profil de l'élément taraudeur arrière (23) présente, en partant d'au moins une arête de taraudage (19), une portion de surface latérale cylindrique (25) orientée vers l'axe longitudinal central (7).

15. Vis selon l'une des revendications 1 à 8, **caractérisée par** au moins deux arêtes de taraudage (19a, 26a ; 19b, 26b).

16. Vis selon la revendication 15, **caractérisée par** une entaille (28) ouverte radialement vers l'extérieur de l'élément taraudeur (11a), au moins l'une des arêtes de taraudage (26a) étant disposée sur un parcours de l'entaille, notamment, un parcours de l'entaille arrière le long de la direction de vissage (2).

17. Vis selon les revendications 15 ou 16, **caractérisée en ce que** l'entaille (28) est disposée entre deux arêtes de taraudage (19a, 26a).

18. Vis selon la revendication 15, **caractérisée par** une section transversale en forme d'escalier le long d'une hélice du filet de taraudage (8) de l'élément taraudeur (11b) comportant une première portion en escalier (29) et une seconde portion en escalier (30), une distance radiale (r_{1PE}) entre au moins une arête de taraudage (19b) de la première portion en escalier (29) et l'axe longitudinal central (7) étant inférieure à une distance radiale (r_{2PE}) entre au moins une arête de taraudage (26b) de la seconde portion en escalier (30) et l'axe longitudinal central (7).
